# FASCICULE DE BREVET EUROPEEN

(11) **EP 1 267 063 B1**
(45) Date de publication et mention de la délivrance du brevet: **19.10.2005**
(21) Numéro de dépôt: 02291357.8
(22) Date de dépôt: 04.06.2002
(51) Int. Cl.: F02K 3/04, F02C 7/36, F02K 3/12

(54) **Dispositif de propulsion à cycle variable par transmission mécanique pour avion supersonique**
Schubvorrichtung mit variablen Betriebzyklen mit mechanischer Kraftübertragung für Überschallflugzeuge
Variable cycle propulsion device using mechanical transmission for supersonic airplanes

(30) Priorité: 14.06.2001 FR 0107775
(43) Date de publication de la demande: 18.12.2002
(73) Titulaire: SNECMA, 75015 Paris (FR)
(72) Inventeur: Franchet, Michel, 77240 Pouilly-le-Fort (FR); Laugier, Yann, 94880 Noiseau (FR); Loisy, Jean, 77310 Ponthierry (FR)
(74) Mandataire: Thévenet, Jean-Bruno

(56) Documents cités:
- US-A- 2 696 079
- US-A- 4 033 119
- US-A- 4 222 235
- US-A- 5 274 999
- "SUPERSONIC BOOM THE NEW CENTURY WILL SEE THE FIRST FLIGHT OF A SUPERSONIC STOVL FIGHTER, THE JSF - BUT HISTORY IS LITTERED WITH OTHER, FAILED, EFFORTS" FLIGHT INTERNATIONAL, REED BUSINESS INFORMATION, HAYWARDS HEATH, GB, vol. 157, no. 4709, 1 janvier 2000 (2000-01-01), pages 82-83,85, XP000887966 ISSN: 0015-3710

## Description

La présente invention est relative à un dispositif de propulsion à cycle variable pour avion supersonique qui permet d'obtenir, d'une part au décollage, à l'atterrissage et en vol en croisière subsonique une forte poussée et un haut taux de dilution afin d'abaisser fortement le bruit et d'améliorer la consommation spécifique lors de ces phases de vol, et d'autre part une forte vitesse d'éjection adaptée au vol en croisière supersonique.

Elle vise plus particulièrement un dispositif de propulsion qui comporte deux configurations différentes; l'une pour le décollage, l'atterrissage et le vol en croisière subsonique, et l'autre pour le vol en croisière supersonique.

Lors de la conception d'un avion commercial supersonique, il se pose notamment le problème du faible bruit du moteur de l'avion au décollage, en montée et à l'atterrissage de celui-ci. En effet, afin d'être certifiés, tous les avions doivent maintenant respecter les réglementations quant au faible bruit au décollage et à l'atterrissage.

Par ailleurs, les moteurs d'avions supersoniques doivent également répondre aux exigences de faible traînée des nacelles en croisière supersonique, de faible consommation spécifique pendant le survol de zones habitées en vitesse de croisière subsonique, et de réduction des émissions polluantes d'oxydes d'azote à proximité de la couche d'ozone à haute altitude.

Afin de répondre à ces différentes exigences, les constructeurs de moteurs ont proposé un moteur à cycle variable pour la propulsion d'avions supersoniques. Typiquement, ce type de moteur comporte un générateur de gaz et au moins une soufflante, cette dernière permettant d'ajuster le taux de dilution du moteur et donc de réduire le bruit. Ce moteur adopte deux configurations différentes; l'une pour le vol en croisière subsonique, le décollage et l'atterrissage à haut taux de dilution, et l'autre pour le vol en croisière supersonique à bas taux de dilution car il existe une certaine incompatibilité entre ces deux phases de vol pour le fonctionnement du moteur.

En effet, l'exigence sur le faible bruit du moteur au décollage et à l'atterrissage implique notamment une faible vitesse d'éjection des gaz au décollage et en vitesse de croisière subsonique, ce qui est en contradiction avec un vol en croisière supersonique qui impose une forte vitesse d'éjection des gaz.

Or, le niveau de bruit dépend de la vitesse d'éjection des gaz, et pour réduire celui-ci à un niveau acceptable, cette vitesse doit être aujourd'hui inférieure à 400 mètres par seconde ce qui correspond à un seuil de 103dB (300m/s soit 90dB à partir de 2006 selon les nouvelles réglementations). Une telle vitesse d'éjection implique donc un moteur à faible poussée spécifique, ce qui correspond à un taux de dilution important, c'est à dire une forte traînée en vol de croisière supersonique.

Ainsi, les moteurs à cycle variable proposés par les constructeurs essaient de combiner le faible niveau de bruit au décollage et à l'atterrissage une faible consommation spécifique en croisière subsonique et une forte poussée spécifique en croisière supersonique à haute altitude.

On connaît plusieurs concepts de moteurs à cycle variable, mais la variation du taux de dilution de ces derniers n'offre pas une bonne optimisation dans les configurations subsonique et supersonique.

En effet, adopter une vitesse d'éjection des gaz égale ou inférieure à 400m/s exige une nacelle de moteur de diamètre important et tous les moteurs à cycle variable connus à ce jour, notamment ceux décrits dans les brevets FR 2 513 697, FR 2 688 271 et FR 2 685 385, requièrent une section frontale de la nacelle plus importante que celle optimisée pour le vol en croisière supersonique quand la soufflante est liée et intégrée au moteur.

On connaît par exemple du brevet américain US 5,529,263 la description d'un avion supersonique comportant un ensemble propulsif pour le décollage, l'atterrissage et le vol en croisière subsonique et deux propulseurs adaptés au vol en croisière supersonique. L'ensemble propulsif est constitué de turboréacteurs d'appoint escamotables à haut taux de dilution, ce qui présente de nombreux inconvénients, notamment d'encombrement et de poids pour l'appareil.

On connaît aussi le brevet US 4,222,235 et l'article de la revue "Flight International" du 1er Janvier 2000 intitulé "Supersonic Boom" qui divulguent des moteurs à cycle variable pour avions à décollage vertical.

### Objet de l'invention

La présente invention vise donc à pallier de tels inconvénients en proposant un dispositif de propulsion à cycle variable pour avions supersoniques qui sépare nettement les deux configurations, subsonique et supersonique, grâce notamment à l'utilisation de une ou plusieurs soufflantes auxiliaires dissociées de grand diamètre.

A cet effet, il est prévu un dispositif de propulsion à cycle variable pour avion supersonique comprenant au moins deux propulseurs capables de générer une poussée pour les vitesses de vol supersonique et au moins un ensemble propulsif auxiliaire, distinct des propulseurs capable de générer un complément de poussée pour le décollage, l'atterrissage et les vitesses de vol subsonique, ledit dispositif étant caractérisé en ce que l'ensemble propulsif auxiliaire est dépourvu de générateur de gaz et en ce que sont prévus des moyens de transmission d'une partie de la puissance mécanique produite par lesdits propulseursvers ledit ensemble propulsif auxiliaire afin que celui-ci génère un complément de poussée pour le décollage, l'atterrissage et le vol en croisière subsonique, et des moyens pour désaccoupler les moyens de transmission pour le vol en croisière supersonique, l'ensemble propulsif auxiliaire étant adapté à être logé dans un fuselage de l'avion de manière à réduire la trainée en vol de croisière subsonique.

Ainsi, l'ensemble propulsif auxiliaire utilise, lors du décollage, de l'atterrissage et du vol en croisière subsonique, des ressources (production d'énergie mécanique) des propulseurs.

L'ensemble propulsif auxiliaire comporte au moins une soufflante dimensionnée pour produire la poussée voulue avec le taux de dilution requis. La puissance mécanique peut être prélevée sur un arbre de turbine, par exemple l'arbre de turbine basse pression du ou des propulseurs et être transmise à l'arbre de la soufflante par une transmission mécanique. Un dispositif d'accouplement de type embrayage est interposé sur la transmission mécanique pour dériver ou non de la puissance mécanique vers l'ensemble propulsif auxiliaire, de façon sélective.

### Brève description des dessins

D'autres caractéristiques et avantages de la présente invention ressortiront de la description faite ci-dessous, en référence aux dessins annexés, de deux modes de réalisation dépourvus de tout caractère limitatif. Sur les figures :
- la figure 1 est une vue schématique et partielle d'un avion comportant un dispositif de propulsion selon un premier mode de réalisation de l'invention, en configuration pour le décollage, l'atterrissage et le vol en croisière subsonique et pour le vol en croisière supersonique ;
- la figure 2 est une vue schématique et partielle d'un avion comportant un dispositif de propulsion selon un deuxième mode de réalisation de l'invention dans ses deux configurations d'utilisation.

### Description détaillée de modes de réalisation

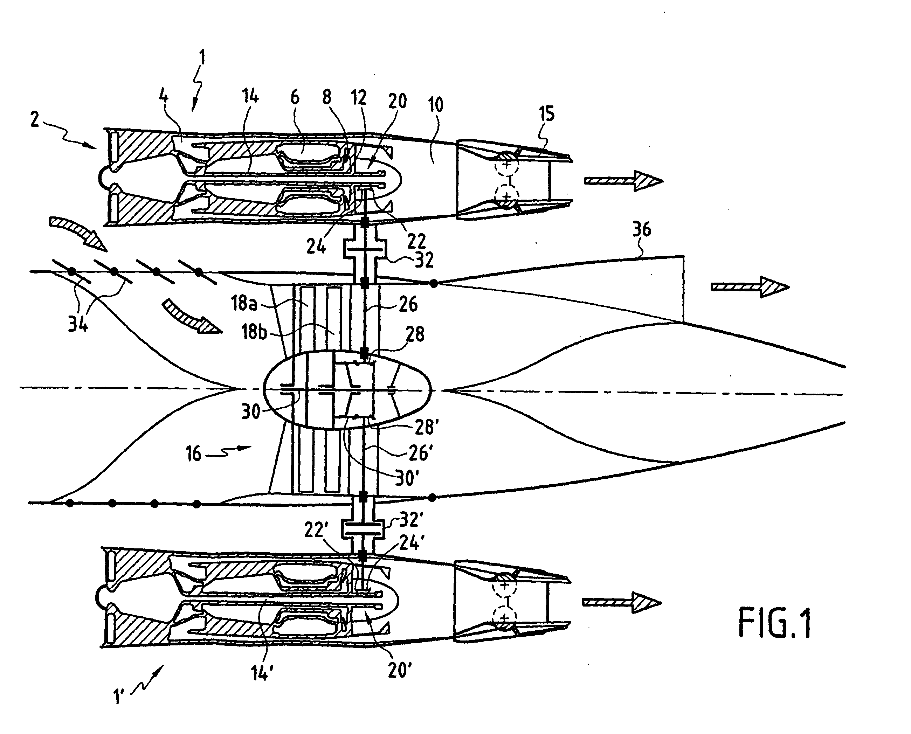

Si on se réfère à la figure 1 qui représente schématiquement une coupe longitudinale d'un dispositif selon un premier mode de réalisation de l'invention, on voit que celui-ci est notamment constitué de deux propulseurs 1 et 1'. Ces propulseurs sont classiquement disposés dans des nacelles (non représentées) qui sont généralement reliées à la face inférieure d'une aile d'avion.

De façon connue, ces propulseurs peuvent être du type monoflux à simple corps, double corps ou triple corps ou encore du type double-flux à simple, double ou triple corps. Dans cet exemple de réalisation, ils comportent notamment chacun une entrée d'air 2, une section de compression 4, une chambre de combustion 6, une turbine haute-pression 8, une section d'éjection 10 des gaz de combustion et une turbine basse-pression 12 qui entraîne en rotation un arbre basse-pression 14. Les propulseurs sont en outre dimensionnés de façon optimale pour le vol en croisière supersonique (période de vol la plus longue). La section d'éjection des gaz se termine par une tuyère 15 à section variable afin de piloter le rapport de détente de la turbine basse-pression.

De plus, toujours selon ce premier mode de réalisation de l'invention, le dispositif de propulsion comporte également un ensemble propulsif auxiliaire 16, distinct des deux propulseurs 1 et 1' et dépourvu de générateur de gaz. Celui-ci est composé notamment de deux soufflantes contrarotatives 18a et 18b avantageusement de grand diamètre. Cet ensemble propulsif auxiliaire est utilisé pour le décollage, l'atterrissage et le vol en croisière subsonique selon une configuration qui sera détaillée plus loin.

Bien entendu, l'ensemble propulsif 16 pourrait comporter une unique soufflante par exemple à large corde commandée par les deux propulseurs 1 et 1'.

Par ailleurs, des moyens 20, 20' de transmission d'une partie de la puissance mécanique produite par les propulseurs 1 et 1' sont notamment constitués d'un système de transmission mécanique classique avec des renvois d'angle 22, 22' couplés avec des couronnes dentées 24 et 24' qui sont montées sur les arbres basse-pression 14 et 14' desdits propulseurs. Ces couronnes dentées transmettent le mouvement de rotation des arbres basse-pression à l'ensemble propulsif 16 par l'intermédiaire d'arbres de transmission 26, 26' et de renvois d'angle 28, 28' couplés aux arbres de rotation 30, 30' des soufflantes 18a et 18b.

Des systèmes d'accouplement/désaccouplement 32 et 32' permettent de dériver ou non vers l'ensemble propulsif 16, de façon sélective, une partie de la puissance mécanique produite par les propulseurs 1 et 1'. Ils sont interposés entre les arbres 14, 14' d'une part, et les arbres 30, 30' d'autre part, et sont montés par exemple sur les arbres de transmission 26 et 26'. Ces systèmes sont commandés en synchronisme. Ils sont d'un type connu pour une transmission mécanique par arbre et ne seront donc pas détaillés.

Sur la figure 1, on voit que les soufflantes 18a et 18b sont directement intégrées dans la partie arrière du fuselage de l'avion. Des ouïes 34 (latérales comme illustrées et/ou ventrales) obturables sont également prévues sur le fuselage de l'avion pour assurer l'alimentation en air des soufflantes 18a et 18b pendant le décollage, l'atterrissage et le vol en croisière subsonique, et des tuyères d'échappement 36 sont déployées afin d'évacuer le flux d'air produisant la poussée lors de ces phases de vol. En vol de croisière supersonique, les ouïes 34 sont obturées après débrayage et arrêt des soufflantes, et les tuyères d'échappement 36 sont escamotées.

On décrira maintenant le fonctionnement du dispositif de propulsion selon ce premier mode de réalisation de l'invention, dans ses deux configurations possibles (phase de décollage, atterrissage et vol en croisière subsonique et phase de vol en croisière supersonique).

Au cours du décollage, de l'atterrissage et en croisière subsonique, les systèmes d'accouplement/désaccouplement 32, 32' sont en mode embrayage et les propulseurs 1 et 1' entraînent les soufflantes 18a, 18b. En raison du prélèvement d'une partie de la puissance mécanique générée par les arbres basse-pression 14, 14' pour entraîner en rotation les soufflantes 18a et 18b de l'ensemble propulsif 16, la vitesse d'éjection des propulseurs 1, 1' est réduite de façon importante.

Le dispositif de propulsion travaille ainsi à haut taux de dilution et à faible vitesse d'éjection ce qui est bien adapté aux phases de décollage, d'atterrissage et de vol en croisière subsonique tout en répondant plus facilement aux exigences de bruit et de faible consommation spécifique. Par taux de dilution, on entend le rapport entre la masse d'air éjectée produite par les soufflantes et la masse des gaz d'échappement éjectés produits par les propulseurs 1, 1'.

La transition entre la phase de vol en croisière subsonique et celle de vol en croisière supersonique s'effectue alors par débrayage des transmissions mécaniques sur les arbres 26, 26'. Les propulseurs 1 et 1' assurent alors seuls la propulsion de l'avion et permettent à celui-ci d'atteindre des vitesses de vol supersonique. Le dispositif fonctionne ainsi à un très faible (voire nul) taux de dilution et forte vitesse d'éjection (ce qui correspond bien à une forte poussée spécifique).

Le logement des soufflantes 18a et 18b dans le fuselage fait que la traînée en vol de croisière supersonique est réduite.

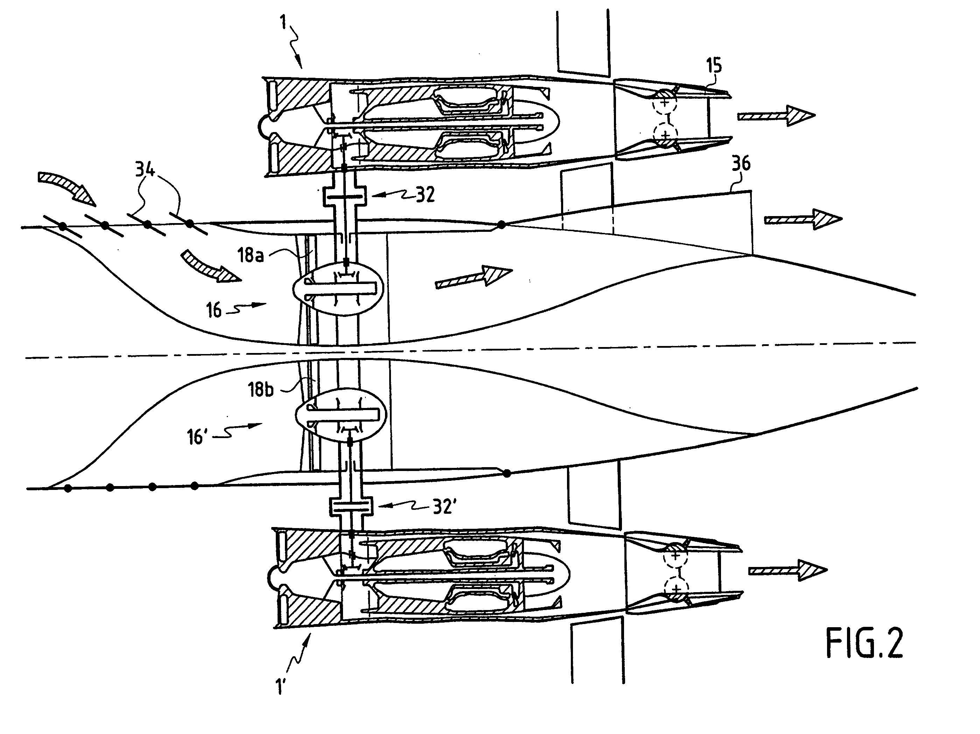

Selon un deuxième mode de réalisation de l'invention (cf. figure 2), le dispositif de propulsion comporte deux propulseurs 1 et 1' commandant indépendamment deux ensembles propulsifs auxiliaires 16 et 16'.

Comme le montre la figure 2, on voit que les soufflantes 18a et 18b sont chacune commandées par un seul des propulseurs 1 et 1' et sont logées dans une partie arrière du fuselage de l'avion. Pour des raisons d'encombrement, ces soufflantes pourraient également être décalées l'une par rapport à l'autre le long de l'axe principal de l'avion. En outre, des ouïes 34 obturables sont aménagées sur le fuselage pour alimenter en air les ensembles propulsifs 16 et 16', et des tuyères d'échappement déployables 36 permettent d'évacuer l'air pour produire la poussée lors du décollage, de l'atterrissage et du vol en croisière subsonique.

Ce mode de réalisation permet, en cas de panne de l'un des ensembles propulsifs, de continuer à alimenter l'autre ensemble propulsif auxiliaire.

Bien entendu, on pourra imaginer tout autre mode de réalisation en combinant un ou plusieurs propulseurs avec un ou plusieurs ensembles propulsifs.

La présente invention telle que décrite précédemment comporte de multiples avantages, et notamment :
- le dispositif de propulsion permet d'obtenir au décollage et à l'atterrissage une vitesse d'éjection des gaz inférieure à 400m/s (voire proche de 300m/s) ce qui correspond à un niveau de bruit inférieur à 103dB (90dB pour une vitesse inférieure à 300m/s) ;
- la soufflante auxiliaire séparée permet d'augmenter de 150 à 160% le débit massique du propulseur qui fonctionne comme un réacteur à haut taux de dilution ;
- la poussée du dispositif de propulsion peut être supérieure d'environ 50 à 60% à celle du propulseur seul, sans le recours d'une réchauffe, et la poussée de la soufflante peut être égale ou proche de plus de la moitié de la poussée totale ;
- le prélèvement de puissance mécanique permet de réduire d'environ 25 à 30% la vitesse d'éjection, ce qui évite l'utilisation d'éjecteurs-mélangeurs ou de silencieux encombrants ;
- une forte baisse de la consommation spécifique en croisière subsonique peut être obtenue grâce à un haut taux de dilution qui est équivalent à celui des avions subsoniques ;
- le dispositif de propulsion utilise un ou plusieurs propulseurs à l'architecture conventionnelle ce qui limite les risques de panne fréquemment liés aux technologiques nouvelles ;
- en cas de panne mécanique puis de débrayage d'un ensemble propulsif auxiliaire, le passage du propulseur débrayé en jet direct à pleine puissance peut permettre de maintenir une poussée suffisante pour continuer le décollage puis assurer l'atterrissage, la préoccupation n'étant plus de respecter les normes de bruit mais d'éviter tout accident à l'avion.

Il demeure bien entendu que la présente invention n'est pas limitée aux exemples de réalisation décrits ci-dessus mais qu'elle en englobe toutes les variantes.

## Revendications

1. Dispositif de propulsion à cycle variable pour avion supersonique comprenant au moins deux propulseurs (1, 1') capables de générer une poussée pour les vitesses de vol supersonique et au moins un ensemble propulsif auxiliaire (16), distinct desdits propulseurs, capable de générer un complément de poussée pour le décollage, l'atterrissage et les vitesses de vol subsonique, ledit dispositif étant **caractérisé en ce que** l'ensemble propulsif auxiliaire (16) est dépourvu de générateur de gaz et **en ce que** sont prévus des moyens (20) de transmission d'une partie de la puissance mécanique produite par lesdits propulseurs vers ledit ensemble propulsif auxiliaire afin que celui-ci génère un complément de poussée pour le décollage, l'atterrissage et le vol en croisière subsonique, et des moyens pour désaccoupler les moyens (20) de transmission pour le vol en croisière supersonique, l'ensemble propulsif auxiliaire (16) étant adapté à être logé dans un fuselage de l'avion de manière à réduire la traînée en vol de croisière supersonique.

2. Dispositif selon la revendication 1, **caractérisé en ce que** les moyens (20) de transmission comportent notamment un système de transmission mécanique du mouvement de rotation d'un arbre (14, 14') des propulseurs (1, 1') audit ensemble propulsif auxiliaire.

3. Dispositif selon la revendication 2, **caractérisé en ce que** les moyens permettant de désaccoupler lesdits moyens de transmission comportent notamment un système d'embrayage (32, 32').

4. Dispositif selon l'une quelconque des revendications 2 et 3, **caractérisé en ce que** l'ensemble propulsif auxiliaire (16) comporte au moins une soufflante entraînée en rotation par le système de transmission mécanique.

5. Dispositif selon l'une quelconque des revendications 1 à 4, **caractérisé en ce que** l'ensemble propulsif auxiliaire (16) comporte au moins deux soufflantes (18a, 18b) contrarotatives.

6. Dispositif selon l'une quelconque des revendications 1 à 5, **caractérisé en ce qu'**il comporte au moins deux propulseurs (1, 1') associés indépendamment à deux ensembles propulsifs auxiliaires (16, 16').

7. Dispositif selon l'une quelconque des revendications 1 à 6, **caractérisé en ce que** ledit fuselage de l'avion comporte des ouïes obturables (34) pour assurer l'alimentation en air du ou des ensembles propulsifs auxiliaires (16, 16') pendant le décollage, l'atterrissage et le vol en croisière subsonique et des tuyères d'échappement escamotables (36) pour évacuer le flux d'air produisant la poussée lors de ces phases de vol.

## Patentansprüche

1. Antriebsvorrichtung mit variablem Zyklus für Überschallflugzeuge, umfassend wenigstens zwei Triebwerke (1, 1'), die geeignet sind, einen Schub für die Überschallfluggeschwindigkeiten zu erzeugen, sowie wenigstens eine von den genannten Triebwerken getrennte Hilfsantriebseinheit (16), die geeignet ist, einen ergänzenden Schub für das Abheben, die Landung und die Unterschallfluggeschwindigkeiten zu erzeugen, wobei die genannte Vorrichtung **dadurch gekennzeichnet ist, daß** die Hilfsantriebseinheit (16) keinen Gaserzeuger aufweist und daß Mittel (20) zur Übertragung eines Teils der durch die Triebwerke erzeugten mechanischen Leistung zu der Hilfsantriebseinheit, damit diese einen ergänzenden Schub für das Abheben, die Landung und den Unterschall-Reiseflug erzeugt, sowie Mittel zum Entkuppeln der Übertragungsmittel (20) für den Überschall-Reiseflug vorgesehen sind, wobei die Hilfsantriebseinheit (16) angepaßt ist, um in einem Rumpf des Flugzeugs derart untergebracht zu werden, daß der Luftwiderstand im Überschall-Reiseflug verringert wird.

2. Vorrichtung nach Anspruch 1, **dadurch gekennzeichnet, daß** die Übertragungsmittel (20) insbesondere ein System zur mechanischen Übertragung der Drehbewegung einer Welle (14, 14') der Triebwerke (1, 1') auf die Hilfsantriebseinheit umfassen.

3. Vorrichtung nach Anspruch 2, **dadurch gekennzeichnet, daß** die Mittel, welche das Entkuppeln der genannten Übertragungsmittel ermöglichen, insbesondere ein Kupplungssystem (32, 32') umfassen.

4. Vorrichtung nach irgendeinem der Ansprüche 2 und 3, **dadurch gekennzeichnet, daß** die Hilfsantriebseinheit (16) wenigstens ein Gebläse aufweist, das über das System zur mechanischen Übertragung drehangetrieben wird.

5. Vorrichtung nach irgendeinem der Ansprüche 1 bis 4, **dadurch gekennzeichnet, daß** die Hilfsantriebseinheit (16) wenigstens zwei gegenläufige Gebläse (18a, 18b) aufweist.

6. Vorrichtung nach irgendeinem der Ansprüche 1 bis 5, **dadurch gekennzeichnet, daß** sie wenigstens zwei Triebwerke (1, 1') aufweist, die unabhängig zwei Hilfsantriebseinheiten (16, 16') zugeordnet sind.

7. Vorrichtung nach irgendeinem der Ansprüche 1 bis 6, **dadurch gekennzeichnet, daß** der genannte Rumpf des Flugzeugs verschließbare Schlitze (34) aufweist, um die Luftversorgung der Hilfsantriebseinheit oder Hilfsantriebseinheiten (16, 16') während des Abhebens, der Landung und dem Unterschall-Reiseflug sicherzustellen, sowie einklappbare Strahlrohre (36), um den Luftstrom, welcher den Schub während dieser Flugphasen erzeugt, abzuführen.

## Claims

1. A variable cycle propulsion system for a supersonic airplane, the system comprising at least two engines (1, 1') capable of generating thrust for supersonic flight speeds, and at least one auxiliary propulsion assembly (16) separate from said engines and capable of generating additional thrust for takeoff, landing, and subsonic flight speeds, said system being **characterised in that** the auxiliary propulsion assembly (16) does not have a gas generator, and **in that** transmission means (20) are provided for transmitting a fraction of the mechanical power produced by said engines to said auxiliary propulsion assembly to enable it to generate additional thrust for takeoff, landing, and subsonic cruising flight, and means are provided for decoupling the transmission means (20) for supersonic cruising flight, the auxiliary propulsion assembly (16) being adapted so as to be housed in the fuselage of the airplane so as to reduce drag during supersonic cruising flight.

2. A system according to claim 1, **characterised in that** the transmission means (20) comprise in particular a mechanical transmission system for transmitting rotation from a shaft (14, 14') of the engines (1, 1') to said auxiliary propulsion assembly.

3. A system according to claim 2, **characterised in that** the means enabling said transmission means to be decoupled comprise specifically a clutch system (32, 32').

4. A system according to claim 2 or claim 3, **characterised in that** the auxiliary propulsion assembly (16) comprises at least one fan rotated by the mechanical transmission system.

5. A system according to any one of claims 1 to 4, **characterised in that** the auxiliary propulsion assembly (16) comprises at least two contrarotating fans (18a, 18b).

6. A system according to any one of claims 1 to 5, **characterised in that** it comprises at least two engines (1, 1') independently associated with two auxiliary propulsion assemblies (16, 16').

7. A system according to any one of claims 1 to 6, **characterised in that** said fuselage of the airplane comprises closable louvers (34) to enable the auxiliary propulsion assembly or assemblies (16, 16') to be fed with air during takeoff, landing, and subsonic cruising flight, and deployable exhaust nozzles (36) to exhaust the flow of air that produces thrust during these stages of flight.
